# EUROPÄISCHE PATENTSCHRIFT

(11) **EP 0 677 487 B1**
(45) Veröffentlichungstag und Bekanntmachung des Hinweises auf die Patenterteilung: **20.10.1999**
(21) Anmeldenummer: 95105484.0
(22) Anmeldetag: 12.04.1995
(51) Int. Cl.: C03B 23/03, C03B 23/035, C03B 35/24

(54) **Verfahren zum Betrieb einer Pressbiegestation für das Biegen von Glasscheiben**
Method for press-bending glass sheets
Procédé pour le fonctionnement d'une presse de bombage de feuilles en verre

(30) Priorität: 15.04.1994 DE 4412746
(43) Veröffentlichungstag der Anmeldung: 18.10.1995
(73) Patentinhaber: FLACHGLAS AKTIENGESELLSCHAFT, 90766 Fürth (DE)
(72) Erfinder: Funk, Dieter, Dipl.-Ing., D-29379 Witten (DE); Bruns, Dieter, Dipl.-Ing., D-47495 Rheinberg (DE); Wenning, Rolf, Dipl.-Ing., D-46397 Bocholt (DE); Brans, Walter, Dipl.-Ing., D-45659 Recklinghausen (DE)
(74) Vertreter: Honke, Manfred, Dr.-Ing.

(56) Entgegenhaltungen:
- WO-A-90/11973
- US-A- 4 285 715
- US-A- 5 143 535

## Beschreibung

Die Erfindung betrifft ein Verfahren zum Betrieb einer Preßbiegestation für das Biegen von Glasscheiben im Zuge der automatischen Fertigung von Kraftfahrzeugscheiben, bei welcher Fertigung die zu biegenden Glasscheiben in einem Durchlaufofen auf eine vorgegebene Biegetemperatur erwärmt und unmittelbar nach Verlassen des Durchlaufofens mit Hilfe eines Horizontalförderers nacheinander liegend in eine taktweise arbeitende Preßbiegestation eingeführt sowie nach dem Biegevorgang aus der Preßbiegestation mit Hilfe eines Fördermittels in Form eines Shuttleringes in eine Kühl- und/oder Vorspannstation eingeführt werden. Die Biegestation weist in ihrer Presse eine obere Preßpatrize mit Vakuum-Fixiereinrichtung für die gebogene Glasscheibe und eine untere Preßmatrize auf, wobei ferner in der Preßbiegestation der Shuttlering, auf dem die gebogene Glasscheibe ablegbar ist und mit dem sie in die Kühl- und/oder Vorspannstation einführbar ist, vorgesehen ist, und wobei die Presse einen auf- und niederbewegbaren Pressenoberholm mit angeschlossener Preßpatrize aufweist, der über eine im Pressengestell gelagerte Preßzylinder/Kolben-Anordnung betätigbar ist.

Eine Preßbiegestation des beschriebenen Aufbaues sowie der beschriebenen Zweckbestimmung und Arbeitsweise gehört im Zuge der automatischen Fertigung von Kraftfahrzeugscheiben einer Anlage an, die im Taktbetrieb arbeitet (WO-A1-90/11973). Sie hat sich ebenso wie die beschriebenen Verfahrensmaßnahmen bewährt. Probleme können jedoch auftreten, wenn einerseits die Glasscheiben besonders schwer und/oder besonders bruchempfindlich sind und andererseits die Fertigung eine hohe Leistung der Anlage insgesamt und dazu kurze Taktzeiten verlangt. In einem solchen Falle kann es vorkommen, daß beim Ablegen der einzelnen gebogenen Glasscheiben auf dem Shuttlering die Glasscheiben Schaden nehmen oder sich bei der Einleitung der Verzögerung, die zum Zwecke des Ablegens durchgeführt wird, von der Unterseite der Preßpatrize mit ihrer Vakuum-Fixierung vorzeitig lösen, und zwar infolge der aus der negativen Beschleunigung resultierenden Kraft, die größer ist als die Haltekraft der Vakuum-Fixiereinrichtung. Eine Reduzierung des Unterdruckes, mit dem die Vakuum-Fixiereinrichtung arbeitet, zum Zwecke der Erhöhung der Saugkraft ist nicht durchführbar, weil die noch verhältnismäßig weiche Glasscheibe die Saugstellen der Vakuum-Fixiereinrichtung auf ihrer Oberfläche abbildet.

Der Erfindung liegt das technische Problem zugrunde, sicherzustellen, daß die gebogenen Glasscheiben bei einer Anlage des beschriebenen Aufbaus stets sicher auf dem Shuttlering abgelegt werden können, und zwar auch bei kurzen Taktzeiten und geringem Unterdruck der Vakuum-Fixiereinrichtung.

Zur Lösung dieser Aufgabe ist Gegenstand der Erfindung ein Verfahren zum Betrieb einer Preßbiegestation für das Biegen von Glasscheiben im Zuge der automatischen Fertigung von Kraftfahrzeugscheiben, bei welcher Fertigung die zu biegenden Glasscheiben in einem Durchlaufofen auf eine vorgegebene Biegetemperatur erwärmt und unmittelbar nach Verlassen des Durchlaufofens mit Hilfe eines Horizontalförderers nacheinander liegend in eine taktweise arbeitende Preßbiegestation mit Hilfe eines Fördermittels in Form eines Shuttleringes in eine Kühl- und/oder Vorspannstation eingeführt werden,
wobei die Preßbiegestation in ihrer Presse eine obere Preßpatrize mit Vakuum-Fixiereinrichtung für die gebogene Glasscheibe und eine untere Preßmatrize aufweist,
wobei ferner in der Preßbiegestation der Shuttlering vorgesehen ist, auf dem die in der Presse gebogene Glasscheibe ablegbar ist und mit dem sie in die Kühl- und/oder Vorspannstation einführbar ist,
wobei weiter die Presse einen auf und nieder beweglichen Pressenoberholm mit angeschlossener Preßpatrize aufweist, der über eine im Pressengestell gelagerte Preßzylinder/Kolben-Anordnung betätigbar ist, und wobei die Kombination der folgenden Merkmale verwirklicht ist:
   a) die gebogene, unter der Preßpatrize mit Hilfe der Vakuum-Fixiereinrichtung gehaltene Glasscheibe wird durch eine Abwärtsbewegung des Pressenoberholms dem Shuttlering zugeführt, der dabei oberhalb der Preßmatrize auf konstantem Niveau gehalten wird,
   b) die Abwärtsbewegung wird nach Maßgabe einer Geschwindigkeitskurve gesteuert oder geregelt, die für den Beginn der Abwärtsbewegung ein Beschleunigungsteilstück, einen Geschwindigkeitsmaximumkurvenabschnitt und ein daran anschließendes Verzögerungsteilstück für das sanfte Ablegen der gebogenen Glasscheibe auf dem Shuttlering aufweist,
   c) die Geschwindigkeitskurve wird so eingerichtet, daß die erste Ableitung der Geschwindigkeitskurve nach der Zeit singularitätenfrei verläuft,
wobei der Unterdruck der Vakuum-Fixiereinrichtung der Masse der gebogenen Scheibe angepaßt und die Verzögerung der Abwärtsbewegung des Pressenoberholms auf den Unterdruck der Vakuum-Fixiereinrichtung so abgestimmt wird, daß die Haltekraft der Vakuum-Fixiereinrichtung stets größer ist als die aus der Verzögerung resultierende Gegenkraft und die gebogene Glasscheibe bei der Verzögerung von der Preßpatrize nicht freikommt, und wobei danach durch Reduzieren oder Abschalten des Unterdruckes der Vakuum-Fixiereinrichtung die gebogene Glasscheibe auf den Shuttlering abgelegt wird. Die Anpassung des Unterdruckes und die beschriebene Abstimmung können bei der Auslegung der entsprechenden Anlage, die nach dem erfindungsgemäßen Verfahren betrieben wird, durchgeführt werden. Das empfiehlt sich insbesondere dann, wenn es sich um eine Anlage handelt, die für eine große Zahl von gleichen Glasscheiben ausgelegt ist und folglich nur von Zeit zu Zeit auf unterschiedliche Betriebsverhältnisse umgestellt werden muß. Entsprechende Umstell- und Anpassungseinrichtungen lassen sich bei solchen Anlagen mit den Hilfsmitteln der modernen Steuerungstechnik und Antriebstechnik unschwer verwirklichen. Das Anpassen und das Abstimmen können dabei manuell durchgeführt werden. Handelt es sich um eine Anlage, die häufiger unterschiedlichen betrieblichen Verhältnissen angepaßt werden muß, beispielsweise weil losweise eine mehr oder weniger großen Anzahl von gleichen Glasscheiben in Losen, deren Glasscheiben von Los zu Los unterschiedlich sind, erfolgen muß, so lehrt die Erfindung, daß ein Rechner vorgesehen ist, mit dem der Unterdruck der Vakuum-Fixiereinrichtung der Masse der einzelnen gebogenen Scheiben angepaßt und die Verzögerung der Abwärtsbewegung des Pressenoberholms auf den Unterdruck der Vakuumfixierung wie im Anspruch 1 beschrieben mit Hilfe des Rechners durchgeführt wird.

Bei dem erfindungsgemäßen Verfahren zum Betrieb der Preßbiegestation kann die Geschwindigkeitskurve nach Maßgabe der Merkmale b) und c) weitgehend beliebig gewählt werden, wenn nur die beschriebene Anpassung und Abstimmung durchgeführt wird. In dem Merkmal, daß die erste Ableitung der Geschwindigkeitskurve nach der Zeit singularitätenfrei verläuft, kommt zum Ausdruck, daß die Geschwindigkeitskurve keine Unstetigkeitsstellen, wie Knicke und dergleichen, aufweist. Tatsächlich erzeugen solche Unstetigkeitsstellen in der Geschwindigkeitskurve Singularitäten in der ersten Ableitung der Geschwindigkeitskurve und damit im Beschleunigungsverlauf, was zum Abwerfen der gebogenen Scheiben von der Preßpatrize trotz mit vorgegebenem Unterdruck arbeitender Vakuum-Fixiereinrichtung führen könnte. Dieses vermeidet die Erfindung, so daß die beschriebene Anpassung und Abstimmung nicht gestört wird und das einwandfreie Ablegen der gebogenen Scheiben auf dem Shuttlering erfolgen kann. Zu guten Ergebnissen, auch bei sehr kurzen Taktzeiten und/oder geringem Unterdruck beim Betrieb der Vakuum-Fixiereinrichtung, kommt man, wenn die Geschwindigkeitskurve einen Ausschnitt aus einer zeitabhängigen Sinuskurve über die Zeit π darstellt, wobei die Zeit π der Länge h der Abwärtsbewegung entspricht und die volle Sinuskurve durch die Zeit 2 π gegeben ist. Bei einer streng sinusförmigen Bewegung verlaufen Beschleunigungsteilstück und Verzögerungsteilstück der Geschwindigkeitskurve stets gleich steil. Eine Änderung des Verzögerungsteilstückes bedeutet hier stets eine entsprechende Änderung des Beschleunigungsteilstückes. Eine Verringerung der Verzögerung bzw. der Verzögerungszeit im Verzögerungsabschnitt bedeutet stets auch eine Verringerung der Beschleunigungsphase. Nach einer weiteren bevorzugten Ausführungsform der Erfindung verläuft das Beschleunigungsteilstück der Geschwindigkeitskurve steiler als das Verzögerungsteilstück, verläuft die Geschwindigkeitskurve also nicht streng sinusförmig. Hierbei kann die Verzögerung bzw. Verzögerungszeit verringert werden, ohne die Beschleunigung im Beschleunigungsabschnitt zu ändern bzw. kann die Taktzeit verkürzt werden, in dem die Beschleunigung im Beschleunigungsabschnitt erhöht wird, ohne Änderungen im Verzögerungsabschnitt vorzunehmen.

Für die Abwärtsbewegung des Pressenholms stellt die moderne Steuerungs- und Antriebstechnik eine Vielzahl von Hilfsmitteln zur Verfügung, die im Rahmen der Erfindung eingesetzt werden können. Durch Einfachheit und Funktionssicherheit ausgezeichnet ist eine Verfahrensweise, bei der die Abwärtsbewegung des Pressenholms mit Hilfe der mit einem hydraulischen Druckmittel betriebenen Preßzylinder/Kolben-Anordnung und einen Servomotor für das Hydrauliksystem vorgenommen wird, der von dem Rechner gesteuert wird. Der Rechner kann nach Programm, zeitabhängig und/oder wegabhängig, arbeiten. Dem Rechner können auch Sensoren zugeordnet sein, die das Arbeiten der Preßbiegestation verfolgen und dem Rechner melden.

Im folgenden wird die Erfindung anhand einer lediglich ein Ausführungsbeispiel darstellenden Zeichnung ausführlicher erläutert. Es zeigen in schematischer Darstellung
- Fig. 1: die Ansicht einer Preßbiegestation für das Biegen von Glasscheiben im Zuge der automatischen Fertigung von Kraftfahrzeugscheiben.
- Fig. 2: eine graphische Darstellung von Weg/Zeit- bzw. Geschwindigkeit/Zeit-Verhältnissen bzw. Beschleunigungs/Zeit-Verhältnissen bei sinusförmiger Bewegung.
- Fig. 3: eine graphische Darstellung von Weg/Zeit- bzw. Geschwindigkeit/Zeit-Verhältnissen bzw. Beschleunigungs/Zeit-Verhältnissen bei nicht sinusförmiger Bewegung.

Beim Biegen von Glasscheiben im Zuge der automatischen Fertigung von Kraftfahrzeugscheiben werden die zu biegenden Glasscheiben in einem der dargestellten Preßbiegestation 1 vorgeschalteten Durchlaufofen auf eine vorgegebene Biegetemperatur erwärmt. Sie werden unmittelbar nach Verlassen des Durchlaufofens mit Hilfe eines Horizontalförderers 2 nacheinander liegend in die taktweise arbeitende Preßbiegestation 1 eingeführt. Nach dem Biegevorgang werden die Glasscheiben G aus der Preßbiegestation 1 mit Hilfe eines Fördermittels herausgenommen und in eine Kühl- und/oder Vorspannstation eingeführt, die der dargestellten Preßbiegestation 1 nachgeschaltet aber nicht gezeichnet ist.

Die Preßbiegestation 1 weist in ihrer Presse 3 eine obere Preßpatrize 4 mit Vakuum-Fixiereinrichtung 5 für die gebogene Glasscheibe, eine untere Preßmatrize 6 und ein Shuttlering 7 auf, der das Fördermittel für den Transport der einzelnen gebogenen Glasscheiben G aus der Preßbiegestation 1 in die Kühl- und/oder Vorspannstation darstellt. Auf dem Shuttlering 7 sind die gebogenen Glasscheiben G einzeln ablegbar und mit diesem werden sie in die Kühl- und Vorspannstation eingeführt. Die Presse 3 besitzt einen auf und nieder bewegbaren Pressenoberholm 8 mit angeschlossener Preßpatrize 4. Der Pressenoberholm 8 ist über eine im Pressengestell 9 gelagerte Preßzylinder/Kolben-Anordnung 10 betätigbar.

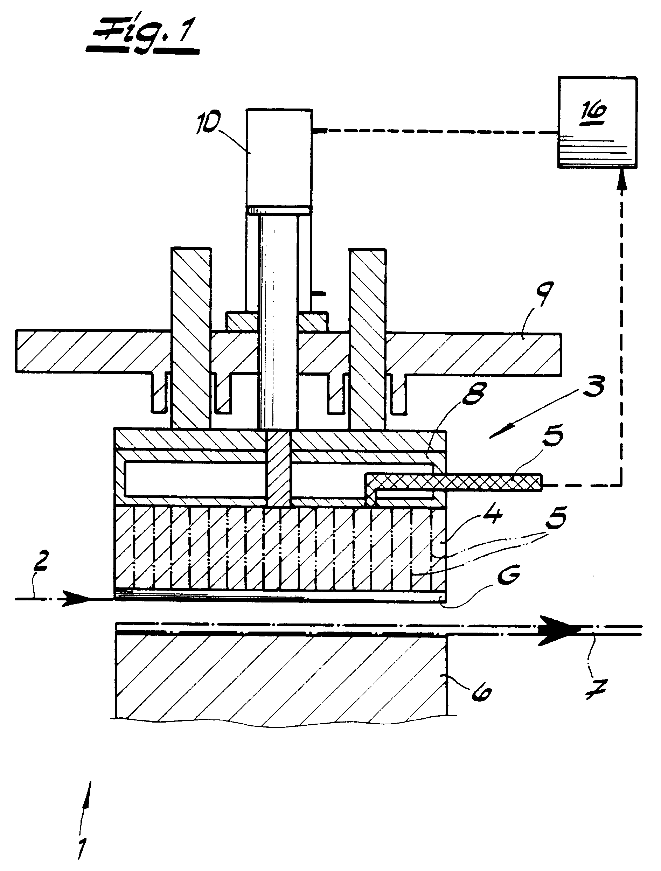

In der Fig. 1 ist erkennbar, daß die gebogene, unter der Preßpatrize 4 mit Hilfe der Vakuum-Fixiereinrichtung 5 gehaltene gebogene Glasscheibe durch eine Abwärtsbewegung des Pressenoberholms dem Shuttlering 7 zugeführt wird, der dabei oberhalb der Preßmatrize 6 auf konstantem Niveau gehalten wird. Insoweit wird auf die Fig. 1 verwiesen.

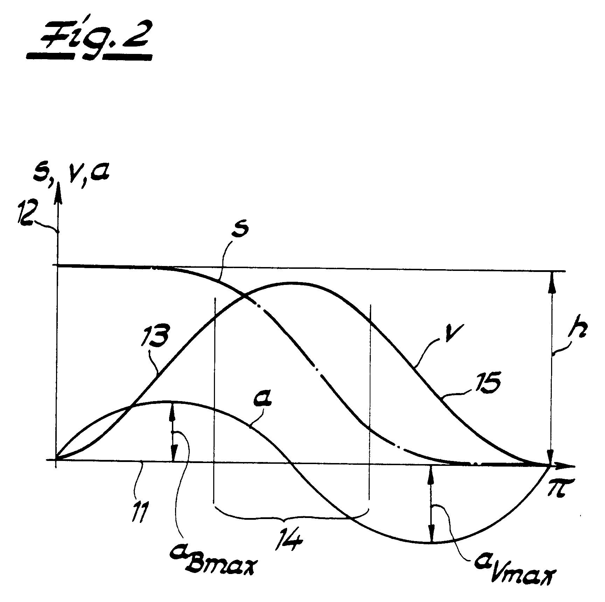

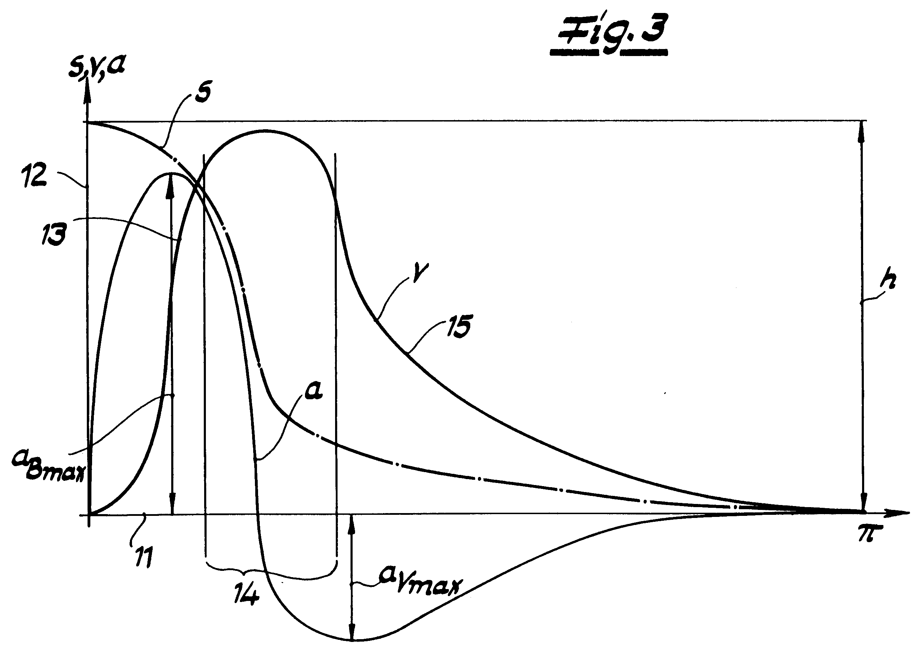

Die Fig. 2 und 3 verdeutlichen die weitere Kinematik der Zusammenhänge. Es handelt sich um graphische Darstellungen, die Weg und Geschwindigkeit der Abwärtsbewegung erläutern. Auf der Abszissenachse 11 ist die Zeit aufgetragen, auf der Ordinatenachse 12 sind der Weg s, die Geschwindigkeit V und die Beschleunigung a aufgetragen. Die Geschwindigkeitskurve wurde jeweils mit V gekennzeichnet, die Beschleunigungskurve mit a und die Wegkurve mit s. Betrachtet man zunächst die Geschwindigkeitskurven V, so erkennt man, daß diese für den Beginn der Abwärtsbewegung ein Beschleunigungsteilstück 13, einen taktzeitbestimmenden Kurvenabschnitt 14 und ein daran anschließendes Verzögerungsteilstück 15 für das sanfte Ablegen der gebogenen Glasscheibe G auf dem Shuttlering 7 aufweisen. Eine Analyse der Geschwindigkeitskurve V ergibt, daß ihre erste Ableitung nach der Zeit jeweils singularitätenfrei verläuft. Die Geschwindigkeitskurve V selbst ist die erste Ableitung der Wegkurve s. Beginnt die Öffnungsbewegung bei der Zeit null, so wird zunächst nur ein kleiner Weg zurückgelegt, der nach Maßgabe der Wegkurve s gleichsam steiler verläuft und dann wieder kleiner wird. Zugeordnet ist folglich die beschriebene Geschwindigkeitskurve v, die erkennen läßt, daß bei Beginn der Abwärtsbewegung die Geschwindigkeit zunächst klein ist, dann auf einen größeren Wert bis zu einem Maximalwert ansteigt und wieder abfällt. Ein sanftes Auflegen der gebogenen Scheiben G auf dem Shuttlering 7 ist folglich möglich. Der Unterdruck der Vakuum-Fixiereinrichtung 5 ist der Masse der gebogenen Glasscheibe G angepaßt. Die Verzögerung der Abwärtsbewegung des Pressenoberholms 8 wird auf den Unterdruck der Vakuum-Fixiereinrichtung 5 so abgestimmt, daß die Haltekraft der Vakuum-Fixiereinrichtung 5 stets größer ist als die aus der Verzögerung resultierte Gegenkraft der gebogenen Glasscheibe G, die der Masse der gebogenen Glasscheibe G proportional ist. Folglich kommt die gebogene Glasscheibe G bei der Verzögerung von der Preßpatrize 4 nicht frei, und zwar auch bei verhältnismäßig geringem Unterdruck nicht, so daß danach durch Abschalten oder Reduzierung des Unterdrucks der Vakuum-Fixiereinrichtung 5 die gebogene Glasscheibe G auf dem Shuttlering 7 sanft abgelegt werden kann.

Im Ausführungsbeispiel und nach bevorzugter Ausführungsform der Erfindung ist ein Rechner 16 vorgesehen, wie es die Fig. 1 andeutet. Mit dem Rechner 16 wird der Unterdruck der Vakuum-Fixierungeinrichtung 5 der Masse der gebogenen Glasscheibe G angepaßt und die schon beschriebene Abstimmung durchgeführt. Im Ausführungsbeispiel wird die Abwärtsbewegung des Pressenoberholms 8 mit Hilfe der mit einem hydraulischen Druckmittel betriebenen Preßzylinder/Kolben-Anordnung 10 und einem nicht gezeichneten Servomotor für das Hydrauliksystem vorgenommen, der von dem Rechner 16 gesteuert wird. Der Rechner 16 selbst arbeitet nach Programm zeitabhängig und/oder wegabhängig, bei wegabhängiger Steuerung mit entsprechenden Sensoren.

Wie die Fig. 2 verdeutlicht, stellt die Geschwindigkeitskurve v nach bevorzugter Ausführungsform der Erfindung einen Ausschnitt aus einer zeitabhängigen Sinuskurve über die Zeit π dar, wobei die Zeit π der Zeit entspricht, die für die Bewegung des Pressenoberholms 8 nach Maßgabe der Distanz für die Abwärtsbewegung erforderlich ist. Am Ende dieser Zeit π und damit am Ende eines Weges, der der Länge h der Abwärtsbewegung entspricht, liegt die gebogene Glasscheibe G auf dem Shuttlering 7 und wurde sie sanft abgelegt. Die volle zeitabhängige Sinuskurve in Fig. 2 entspricht der Zeit 2π. Wie die Fig. 2 verdeutlicht, verlaufen bei sinusförmiger Bewegung Beschleunigungsteilstück 13 und Verzögerungsteilstück 15 der Geschwindigkeitskurve V gleich steil. Hierbei bedeutet eine Verringerung der maximalen Verzögerung a_{Vmax} stets auch eine entsprechende Verringerung der maximalen Beschleunigung a_{Bmax} der Beschleunigungsphase. Nach einer weiteren bevorzugten Ausführungsform der Erfindung, die die Fig. 3 veranschaulicht, verläuft das Beschleunigungsteilstück 13 der Geschwindigkeitskurve V steiler als das Verzögerungsteilstück 15. Bei dieser Ausführungsform der Erfindung ist eine Verkürzung der Taktzeit möglich, in dem die maximale Beschleunigung a_{Bmax} des Beschleunigungsabschnittes erhöht wird, ohne gleichzeitig a_{Vmax} entsprechend zu ändern.

Es versteht sich, daß nach Ablegen einer gebogenen Glasscheibe G auf den Shuttlering 7 der Shuttlering 7 aus der Preßbiegestation 1 herausgeführt wird, während gleichzeitig eine weitere zu biegende Glasscheibe in die Preßbiegestation 1 eingeführt wird. Insoweit werden bekannte und bewährte Maßnahmen verwirklicht.

## Patentansprüche

1. Verfahren zum Betrieb einer Preßbiegestation (1) für das Biegen von Glasscheiben (G) im Zuge der automatischen Fertigung von Kraftfahrzeugscheiben, bei welcher Fertigung die zu biegenden Glasscheiben (G) in einem Durchlaufofen auf eine vorgegebene Biegetemperatur erwärmt und unmittelbar nach Verlassen des Durchlaufofens mit Hilfe eines Horizontalförderers (2) nacheinander liegend in eine taktweise arbeitende Preßbiegestation (1) eingeführt sowie nach dem Biegevorgang aus der Preßbiegestation (1) mit Hilfe eines Fördermittels in Form eines Shuttleringes (7) in eine Kühl- und/oder Vorspannstation eingeführt werden,
wobei die Preßbiegestation (1) in ihrer Presse (3) eine obere Preßpatrize (4) mit Vakuum-Fixiereinrichtung (5) für die gebogene Glasscheibe (G) und eine untere Preßmatrize (6) aufweist,
wobei ferner in der Preßbiegestation (1) der Shuttlering (7) vorgesehen ist, auf dem die in der Presse (3) gebogene Glasscheibe (G) ablegbar ist und mit dem sie in die Kühl- und/oder Vorspannstation einführbar ist,
wobei weiter die Presse (3) einen auf und nieder beweglichen Pressenoberholm (8) mit angeschlossener Preßpatrize (4) aufweist, der über eine im Pressengestell (9) gelagerte Preßzylinder/Kolben-Anordnung (10) betätigbar ist, und wobei die Kombination der folgenden Merkmale verwirklicht ist:
a) die gebogene, unter der Preßpatrize (4) mit Hilfe der Vakuum-Fixiereinrichtung (5) gehaltene Glasscheibe (G) wird durch eine Abwärtsbewegung des Pressenoberholms (8) dem Shuttlering (7) zugeführt, der dabei oberhalb der Preßmatrize (6) auf konstantem Niveau gehalten wird,
b) die Abwärtsbewegung wird nach Maßgabe einer Geschwindigkeitskurve (V) gesteuert oder geregelt, die für den Beginn der Abwärtsbewegung ein Beschleunigungsteilstück (13), einen Geschwindigkeitsmaximumkurvenabschnitt und ein daran anschließendes Verzögerungsteilstück (15) für das sanfte Ablegen der gebogenen Glasscheibe (G) auf dem Shuttlering (7) aufweist,
c) die Geschwindigkeitskurve (V) wird so eingerichtet, daß die erste Ableitung der Geschwindigkeitskurve (V) nach der Zeit singularitätenfrei verläuft,
wobei der Unterdruck der Vakuum-Fixiereinrichtung (5) der Masse der gebogenen Glasscheibe (G) angepaßt und die Verzögerung der Abwärtsbewegung des Pressenoberholms (8) auf den Unterdruck der Vakuum-Fixiereinrichtung (5) so abgestimmt werden, daß die Haltekraft der Vakuum-Fixiereinrichtung (5) stets größer ist als die aus der Verzögerung resultierende Gegenkraft und die gebogene Glasscheibe (G) bei der Verzögerung von der Preßpatrize (4) nicht freikommt, und wobei danach durch Reduzieren oder Abschalten des Unterdruckes der Vakuum-Fixiereinrichtung (5) die gebogene Glasscheibe (G) auf den Shuttlering (7) abgelegt wird.

2. Verfahren nach Anspruch 1, dadurch gekennzeichnet, daß ein Rechner (16) vorgesehen ist, mit dem der Unterdruck der Vakuum-Fixiereinrichtung (5) der Masse der gebogenen Glasscheibe (G) angepaßt und die Verzögerung der Abwärtsbewegung des Pressenoberholms (8) auf den Unterdruck der Vakuum-Fixiereinrichtung (5) nach Maßgabe des Patentanspruches 1 abgestimmt wird.

3. Verfahren nach Anspruch 1 oder 2, dadurch gekennzeichnet, daß die Geschwindigkeitskurve (V) einen Ausschnitt aus einer zeitabhängigen Sinuskurve über die Zeit π darstellt, wobei die Zeit π der Länge h der Abwärtsbewegung entspricht und die volle Sinuskurve der Zeit 2π entspricht.

4. Verfahren nach einem der Ansprüche 1 bis 3, dadurch gekennzeichnet, daß das Beschleunigungsteilstück (13) der Geschwindigkeitskurve (V) steiler verläuft als das Verzögerungsteilstück (15).

5. Verfahren nach einem der Ansprüche 1 bis 4, dadurch gekennzeichnet, daß die Abwärtsbewegung des Pressenoberholms (8) mit Hilfe der mit einem hydraulischen Druckmittel betriebenen Preßzylinder/Kolben-Anordnung (10) und einem Servomotor für das Hydrauliksystem vorgenommen wird, der von dem Rechner (16) gesteuert wird.

6. Verfahren nach einem der Ansprüche 2 bis 5, dadurch gekennzeichnet, daß der Rechner (16) nach Programmen arbeitet und zeitabhängig und/oder wegabhängig gesteuert wird.

## Claims

1. Process for the operation of a press-bending station (1) for bending glass sheets (G) during the course of automated production of motor vehicle windows, during which production the glass sheets (G) to be bent are heated in a continuous furnace to a specified bending temperature and directly after leaving the continuous furnace are fed consecutively in horizontal position with the aid of a horizontal conveyor (2) into a cyclically operating press-bending station (1) and after the bending operation are fed out of the press-bending station (1) with the aid of a means of conveyance in the form of a shuttle ring (7) into a cooling and/or toughening station,
where the press-bending station (1) incorporates in its press (3) an upper male press mould (4) with vacuum locating device (5) for the bent glass sheet (G) and a lower female press mould (6),
where furthermore in the press-bending station (1) the shuttle ring (7) is provided on which the glass sheet (G) bent in the press (3) can be deposited and with which it can be fed into the cooling and/or toughening station,
where furthermore the press (3) incorporates a press upper beam (8) with attached male press mould (4) which is movable up and down and which can be operated by means of a press cylinder/piston arrangement (10) mounted in the press frame (9), and where the combination of the following features is realized:
a) the bent glass sheet (G) retained under the male press mould (4) with the aid of the vacuum locating device (5) is fed by a downward movement of the press upper beam (8) to the shuttle ring (7) which is maintained at a constant level above the female press mould (6),
b) the downward motion is controlled or regulated according to a velocity curve (V) which incorporates for commencement of downward motion an acceleration section (13), a maximum velocity curve section and a subsequent deceleration section (15) for soft deposition of the bent glass sheet (G) on the shuttle ring (7),
c) the velocity curve (V) is such that the first derivative of the velocity curve (V) is free from singularities with respect to time,
where the reduced pressure of the vacuum locating device (5) is matched to the mass of the bent glass sheet (G) and deceleration of the downward motion of the press upper beam (8) is matched to the reduced pressure of the vacuum locating device (5) such that the retaining force of the vacuum locating device (5) is always greater than the opposing force resulting from deceleration and the bent glass sheet (G) is not released from the male press mould (4) during deceleration and where subsequently, as a result of reducing or shutting off of the reduced pressure of the vacuum locating device (5), the bent glass sheet (G) is deposited on the shuttle ring (7).

2. Process in accordance with claim 1, characterized by the fact that provision is made for a computer (16) with which the reduced pressure of the vacuum locating device (5) is matched to the mass of the bent glass sheet (G) and deceleration of the downward motion of the press upper beam (8) to the reduced pressure of the vacuum locating device (5) according to Patent claim 1.

3. Process in accordance with one of claims 1 or 2, characterized by the fact that the velocity curve (V) represents a section of a time-function sine curve over the time π, where the time π corresponds to the length h of downward motion and the complete sine curve corresponds to the time 2π.

4. Process in accordance with one of claims 1 or 2, characterized by the fact that the acceleration section (13) of the velocity curve (V) is steeper than the deceleration section (15).

5. Process in accordance with one of claims 1 to 4, characterized by the fact that the downward motion of the press upper beam (8) is effected with the aid of the press cylinder/piston arrangement (10) operated with a hydraulic medium and with a servomotor for the hydraulic system which is controlled by the computer (16).

6. Process in accordance with one of claims 2 to 5, characterized by the fact that the computer (16) operates according to a program and is controlled as a function of time and/or displacement.

## Revendications

1. Procédé pour faire fonctionner un poste de bombage sous pression (1) pour le bombage de feuilles de verre (G) au cours de la fabrication automatique de vitres de véhicules automobiles, les feuilles de verre à bomber (G) étant, durant ladite fabrication, chauffées à une température de bombage prédéfinie dans un four continu, introduites à l'aide d'un convoyeur horizontal (2) les unes après les autres en position couchée dans un poste de bombage sous pression à fonctionnement cadencé (1) immédiatement après avoir quitté le four continu et, à l'issue de l'opération de bombage, sorties du poste de bombage sous pression (1) à l'aide d'un moyen de convoyage en forme de berceau de navette (7) et introduites dans une station de refroidissement et/ou de précontrainte,
le poste de bombage sous pression (1) comportant, dans sa presse (3), un poinçon de pression supérieur (4) avec dispositif d'immobilisation à vide (5) pour la feuille de verre bombée (G) et une matrice de pression inférieure (6),
le berceau de navette (7), sur lequel la feuille de verre (G) bombée dans la presse (3) peut être déposée et avec lequel elle est introduite dans le poste de refroidissement et/ou de précontrainte, se trouvant également dans le poste de bombage sous pression (1),
la presse (3) comportant par ailleurs une traverse supérieure de presse à mouvement ascendant et descendant (8) à laquelle est relié le poinçon de pression (4) et qui peut être actionnée par l'intermédiaire d'un agencement piston-cylindre de pression (10) implanté dans le bâti de presse (9), et la combinaison des caractéristiques suivantes étant réalisée :
a) la feuille de verre bombée (G) maintenue sous le poinçon de pression (4) à l'aide du dispositif d'immobilisation à vide (5) est transférée, par un mouvement descendant de la traverse supérieure de presse (8), sur le berceau de navette (7), lequel est alors maintenu à un niveau constant au-dessus de la matrice de pression (6),
b) le mouvement descendant est contrôlé ou régulé en fonction d'une courbe de vitesse (V) qui comporte, pour le début du mouvement descendant, un segment d'accélération (13), une portion de courbe de vitesse maximale et, à sa suite, un segment de ralentissement (15) pour déposer en douceur la feuille de verre bombée (G) sur le berceau de navette (7),
c) la courbe de vitesse (V) est calculée pour que le tracé de la dérivée première de la courbe de vitesse (V) en fonction du temps soit dépourvu de singularités,
la pression négative du dispositif d'immobilisation à vide (5) étant adaptée à la masse de la feuille de verre bombée (G) et le ralentissement du mouvement descendant de la traverse supérieure de presse (8) étant harmonisé avec la pression négative du dispositif d'immobilisation à vide (5), de façon que la force de maintien du dispositif d'immobilisation à vide (5) soit toujours supérieure à la force antagoniste résultant du ralentissement et que la feuille de verre bombée (G) ne se sépare pas du poinçon de pression (4) lors du ralentissement, et la feuille de verre bombée (G) étant ensuite déposée sur le berceau de navette (7) par réduction ou suppression de la pression négative du dispositif d'immobilisation à vide (5).

2. Procédé selon la revendication 1, caractérisé en ce qu'il est prévu un calculateur (16) qui, conformément à la revendication 1, permet d'adapter la pression négative du dispositif d'immobilisation à vide (5) à la masse de la feuille de verre bombée (G) et d'harmoniser le ralentissement du mouvement descendant de la traverse supérieure de presse (8) à la pression négative du dispositif d'immobilisation à vide (5).

3. Procédé selon la revendication 1 ou 2, caractérisé en ce que la courbe de vitesse (V) représente, en fonction du temps π, un tronçon d'une sinusoïde variable dans le temps, le temps π correspondant à la longueur h du mouvement descendant et la sinusoïde complète correspondant à un temps 2π.

4. Procédé selon l'une des revendications 1 à 3, caractérisé en ce que le segment d'accélération (13) de la courbe de vitesse (V) possède une pente plus raide que le segment de ralentissement (15).

5. Procédé selon l'une des revendications 1 à 4, caractérisé en ce que le mouvement descendant de la traverse supérieure de presse (8) est engendré par l'agencement piston-cylindre de pression (10), animé par un agent hydraulique sous pression, et par un servomoteur destiné au système hydraulique et commandé par le calculateur (16).

6. Procédé selon l'une des revendications 2 à 5, caractérisé en ce que le calculateur (16) fonctionne selon des programmes et est commandé en fonction du temps et/ou de la course.
